# EUROPÄISCHE PATENTSCHRIFT

(11) **EP 1 032 255 B1**
(45) Veröffentlichungstag und Bekanntmachung des Hinweises auf die Patenterteilung: **29.08.2001**
(21) Anmeldenummer: 98964447.1
(22) Anmeldetag: 26.11.1998
(51) Int. Cl.: A01G 3/02

(54) **AMBOSSGARTENSCHERE**
ANVIL GARDEN SHEARS
SECATEUR A ENCLUME

(30) Priorität: 28.11.1997 AT 202797
(43) Veröffentlichungstag der Anmeldung: 06.09.2000
(73) Patentinhaber: Wurscher, Raimund, A-1130 Wien (AT)
(72) Erfinder: Wurscher, Raimund, A-1130 Wien (AT)
(74) Vertreter: Hartz, Nikolai F., Dr.
(86) Internationale Anmeldenummer: EP9807636
(87) Internationale Veröffentlichungsnummer: WO9927767

(56) Entgegenhaltungen:
- WO-A-97/24921
- DE-A- 19 712 170
- US-A- 3 390 455
- US-A- 5 226 236

## Beschreibung

Die Erfindung bezieht sich auf Amboßgartenscheren gemäß dem Oberbegriff des Anspruchs 1.

Eine solche Schere ist durch die US 5,226,236 bekannt.

Es handelt sich um eine Amboßgartenschere mit einer Art Reiß- oder Fangzahn am maulmittleren Bereich der Amboßbacke, dessen maulhöhere Flanke unmittelbar an seine maultiefere Flanke (Wirkflanke) anschließt, und der die Maulöffnung in einen maulhöheren zahnlosen und einen maultieferen zahnlosen Bereich teilt.

Der Hauptnachteil dieses Zahnes ist, daß er bei mittleren Tiefenlagen des Astes im Maul schwere Verletzungen des Astes verursacht.

Ein weiterer Nachteil ist, daß die Backen um mehr als die Zahnbreite länger sein müssen, um auch im maulhöheren Bereich dickere Äste erfassen und durchschneiden zu können, wie dies an engen Stellen oft notwendig ist. Dies erhöht die Anfälligkeit der Backen gegenüber Belastungen, was einen höheren Fertigungsaufwand erfordert und verringert die Übersetzung in diesem Maulbereich.

Die WO 97/24921 A1 zeigt eine kurzbackige Amboßgartenschere mit einem Zahn, dessen am maulhöheren Ende der Amboßfläche beginnende, zum Maultieferen hin geneigte maulhöhere Flanke seine am maulmittleren Bereich der Amboßfläche beginnende, zum Maulhöheren hingeneigte Wirkflanke über einer abgestumpften Zahnspitze in einem eingeschlossenen Winkel von etwa 100° trifft.

Auch dieser Zahn verursacht bei gewissen Tiefenlagen im Maul schwere Astverletzungen.

Weiters ist das Erfassen und Durchschneiden von Ästen im maulhöheren Bereich dieses Scherenmauls (oberhalb der Wirkflanke) nicht möglich, da hier der Ast zwischen der Schneide und der geneigten maulhöheren Zahnflanke aus dem Maul gedrückt wird. Dies ist besonders an engen Stellen nachteilig.

Die Erfindung hat sich deshalb die Aufgabe gestellt, eine kurzbackige gattungsgemässe Ambossgartenschere zu schaffen, die im gesamten Maulbereich Äste erfassen und durchschneiden kann und deren Zahn keine Verletzungen des Astes verursacht.

Eine weitere Aufgabe ist die Schaffung einer hochbelastbaren fertigungstechnisch billigen gattungsgemässen Schere. Eine weitere Aufgabe ist die Schaffung einer handlichen Ambossgartenschere höherer Schneidkraft.

Erfüllt bzw. erfüllbar sind diese Aufgaben durch das im Anspruch 1 angegebene Erfindungsmerkmal.

Die Unteransprüche sind vorteilhafte Weiterbildungen bzw. vorteilhafte Konsequenzen der Erfindungsidee. Nachstehend wird die Erfindung anhand eines in den Zeichnungen dargestellten Ausführungsbeispiels näher erläutert. Es zeigen:

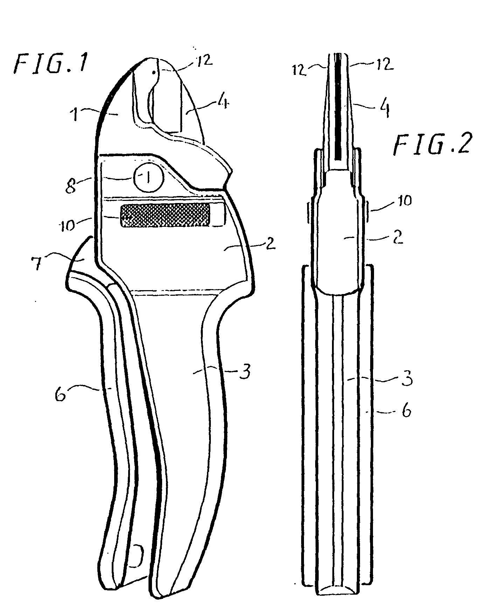

- Fig. 1: eine Draufsicht auf die geschlossene Schere,
- Fig. 2: eine Seitenansicht der Schere,
- Fig. 3: einen Längsschnitt durch die geschlossene Schere,
- Fig. 4: einen Querschnitt durch die Scherengriffe der geschlossenen Schere,
- Fig. 5: einen Längsschnitt durch die vollständig geöffnete Schere, mit dem im maultieferen Bereich der Maulöffnung eingeführten dicksten dort einführbaren Ast,
- Fig. 6: eine Draufsicht auf das vollständig geöffnete Scherenmaul im Maßstab 3:1.
- Fig. 7: eine Draufsicht auf die Amboßfläche im Maßstab 3:1,
- Fig. 8: eine Draufsicht auf das Scherenmaul mit einem im maulhöheren Bereich erfassten Ast mittlerer Dicke 5 im Maßstaß 2 : 1.

Der Amboßschenkel ist ein faserverstärkter Kunststoffteil. Er besteht aus der Amboßbacke 1 mit einer Amboßfläche 11, dem taschenförmigen Kreuzungsbereich 2 und der im Querschnitt U-förmigen ersten Griffhälfte 3.

Der Messerschenkel besteht aus der Messerbacke 4 mit einer Schneide 15, dem Kreuzungsbereich 5 und der aufgesteckten zweiten Griffhälfte 6. Er kreuzt den Amboßschenkel, wobei sein Kreuzungsbereich 5 und das mit Lagerflächen 7 ausgestattete obere Ende seiner Griffhälfte 6 den taschenförmigen Kreuzungsbereich 2 des Amboßschenkels durchsetzen und in diesem gelagert sind. Die Länge und Breite der Lagerung ist etwa gleich der doppelten Länge bzw. Breite des nicht gelagerten Teiles der Messerbacke 4.

Ein Gelenkbolzen 8 ist in senkrecht zur Schwenkebene 13 der Schere durch die Taschenwandungen des Amboßschenkels verlaufenden Bohrungen mit Presspassung befestigt und durchsetzt eine Bohrung im Messerschenkel mit Gleitpassung. Er liegt zentral in der Verlängerung der Schneide 15 und der Amboßfläche 11.

Die im Kreuzungsbereich 2 des Amboßschenkels ebenfalls gelagerte Spiralfeder 9 wirkt auf den Griffteil 6 des Messerschenkels und öffnet die Schere.

Der Schuber 10 arretiert die geschlossene Schere.

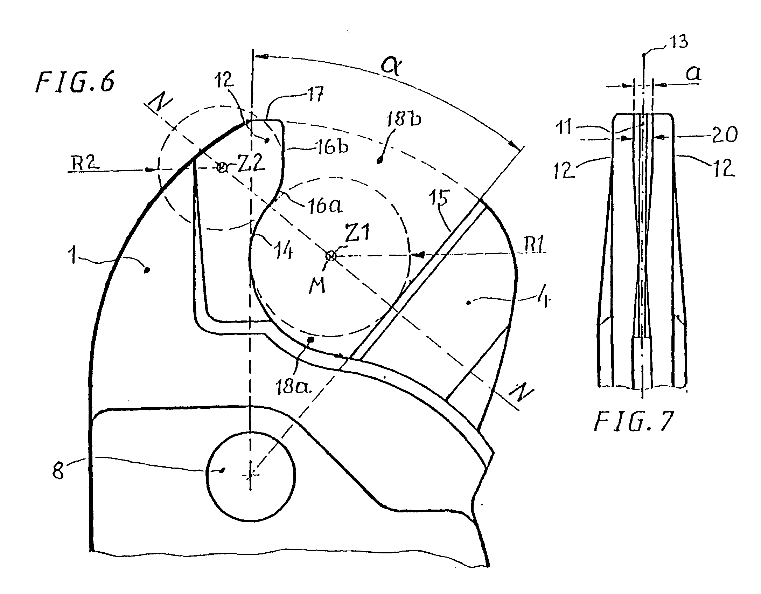

An der Amboßbacke 1 ist seitlich außerhalb der Amboßfläche 11 je ein Zahn 12,12 spiegelsymmetrisch um die Schwenkebene 13 angeordnet (Fig. 6 und 7). Jeder Zahn 12 besitzt im maulmittleren Bereich eine maultiefere Flanke 14, im folgenden Wirkflanke 14 genannt. An die Wirkflanke 14 schließt eine Wirkfläche 16a,16b an, welche die senkrecht vom vorderen Ende der Amboßbacke ansteigende maulhöhere Zahnflanke 17 in einem Punkt trifft, der vom Gelenkbolzen 8 gleich weit entfernt ist wie das maulhöhere Ende der Schneide 15.

Die Wirkflanke 14 bildet das Wellental einer Wellenlinie. Der an die Wirkflanke 14 anschließende maultiefere Abschnitt 16a der Wirkfläche bildet den Wellenberg besagter Wellenlinie. Der folgende maulhöhere Abschnitt 16b der Wirkfläche folgt einer den Abschnitt 16a tangierenden Geraden. Der Radius R1 der Wirkflanke 14 ist gleich dem Radius des dicksten in den maultieferen Bereich 18a der Maulöffnung einführbaren Astes. Der Radius R2 des maultieferen Abschnittes 16a der Wirkfläche ist geeigneterweise etwas kürzer als der Radius R1 der Wirkflanke 14. Die Zentren Z1 und Z2 beider Radien R1 und R2 liegen in der Normalen N zur Schneide 15 durch den Mittelpunkt M des dicksten in den maultieferen Bereich 18a der Maulöffnung einführbaren Astes.

Der Spalt 20 zwischen den Zähnen 12 hat einen V-förmigen Querschnitt. Die Spaltbreite a von etwa 2 mm am Spalteingang verringert sich zur Spaltsohle (Amboßfläche 11) hin auf etwa 0,5 mm. Dies ergibt eine breite Zahnbasis, was die Stabilitat der Zähne erhöht.

Die Wirkflanke 14, zusammen mit dem an sie anschließenden Bereich der Wirkfläche 16a, begrenzen zwingend das Herausrutschen eines Astes aus dem maultieferen Bereich 18a der Maulöffnung.

Es wird deutlich, daß die erfindungsgemäße, über den ganzen maulhöheren Bereich der Amboßbacke sich erstreckende Wirkfläche 16a, 16b der Zähne ein Zahnprofil 14, 16a, 16b, 17 ermöglicht, bei dem es in keiner Tiefenlage des Astes im Scherenmaul zu dessen Verletzung durch die Zähne kommen kann. Die Äste können in jeder Tiefenlage im Scherenmaul erfaßt und durchschnitten werden. Auch können dünne Aste, auf Grund der geringen Spaltbreite a, nicht in den Spalt 20 hineingedrückt und geknickt werden.

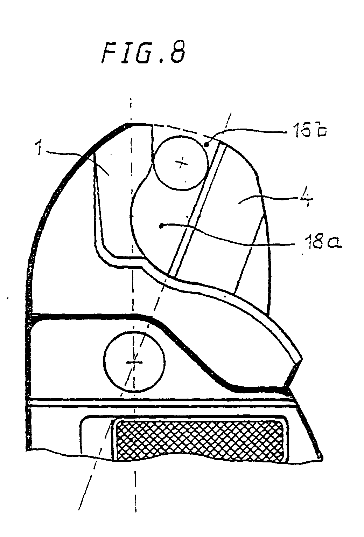

Weiters wird deutlich, daß der maulhöhere Bereich 18b der Maulöffnung unmittelbar an den maultieferen Bereich 18a anschließt. Es kommt zu keinem Übersetzungsverlust im maulhöheren Bereich 18b der Maulöffnung und die Backen 1 und 4 müssen nicht verlängert werden, um auch dickere Äste im maulhöheren Bereich 18b erfassen und durchschneiden zu können (Fig. 8).

Die vorliegende Lösung des Rutschproblems - das Herausrutschen der Äste aus dem Scherenmaul - ist weitgehend unabhängig von der Grösse des Maulöffnungswinkels α der vollständig geöffneten Schere. α ist bei dem Ausführungsbeispiel 42°, somit wesentlich grösser als die bei zahnlosen Scheren sinnvolle Größe. Folglich hat die Schere extrem kurze Backen und Griffe, was die Belastbarkeit der Schere entsprechend erhöht. Weiters wird die Übersetzung und somit die auf den Ast wirkende Schneidkraft der Schere, für eine gegebene Gesamtlänge der Schere und für einen gegebenen Astdurchmesser, umso höher, je grösser α ist. Somit ist bei einer erfindungsgemäßen Schere mit einer nach wie vor handlichen Gesamtlänge, eine höhere Schneidkraft erhältlich.

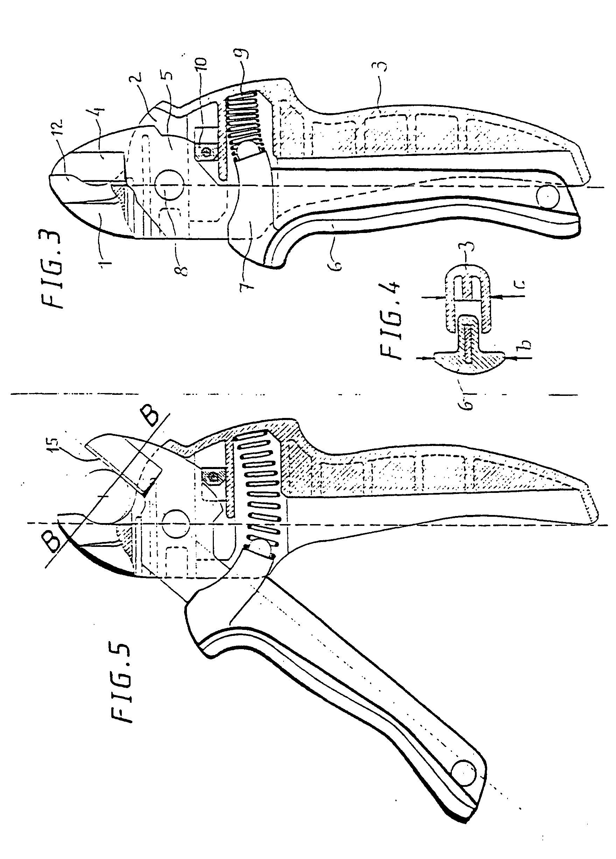

Um die Rutschgefahr zu verringern, hat man bei zahnlosen Amboßscheren das Scherengelenk 8 seitlich so versetzt, daß man eine ins Maultiefere gerichtete Bewegung der Schneide, einen sogenannten ziehenden Schnitt, erhält. Dies hat aber zur Folge, daß beim Durchschneiden eines Astes der Normalabstand des Scherengelenks von der Wirklinie B-B der auf den Ast wirkenden Backenkraft (Schneidkraft) (Fig.5) während des Schnittes zunimmt. Dies ist gleichbedeutend mit einem im Verlauf des Schnittes zunehmenden Übersetzungsverlust. Die vorliegende Lösung des Rutschproblems ist unabhängig von der Lage des Scherengelenks. Das Gelenk 8 kann daher zentral angeordnet werden, wodurch es zu keinem Übersetzungsverlust während des Schnittes kommt.

Die erste Griffhälfte 3 (Fig.4) umfasst bei der geschlossenen Schere teilweise die zweite Griffhälfte 6. Sie kann deshalb besonders breit sein. Dies erhöht die Biegefestigkeit des Amboßschenkels. Dazu ist die Dicke b des nicht umfassten Teiles der zweiten Griffhälfte 6 grösser als die Dicke c der ersten Griffhälfte 3. Dies verhindert das Einklemmen der Finger zwischen den Griffhälften. Aus den vorgenannten Gründen ist es möglich, einen Amboßschenkel hoher Biegefestigkeit als einen herstellungstechnisch billigen Kunststoffteil anzufertigen. Die erfindungsgemäße Lagerung des Messerschenkels im Amboßschenkel ist gegenüber Querbelastungen besonders stabil und gewährleistet, zusammen mit den kurzen Backen 1 und 4, eine genaue Führung der Schneide 15 in den schmalen Spalt 20 zwischen den Zähnen 12. Das Ausführungsbeispiel zeigt eine geeignete Profilform des Zahnes 12. Die Erfindung ist jedoch nicht auf diese beschränkt, da unter dem Erfindungsmerkmal des Anspruchs 1 auch andere Profilformen möglich sind, welche die gestellten Aufgaben erfüllen.

## Patentansprüche

1. Amboßgartenschere mit einem Amboßschenkel, bestehend aus einer Amboßbacke (1) mit einer Amboßfläche (11), einem Kreuzungsbereich (2) und einer ersten Griffhälfte (3), der einen Messerschenkel, bestehend aus einer Messerbacke (4) mit Schneide (15), einem Kreuzungsbereich (5) und einer zweiten Griffhälfte (6), kreuzt und an diesen mittels eines Gelenkbolzens (8) schwenkbar angelenkt ist, in der die Maulöffnung (18a,18b) von der Amboßfläche (11) und der Schneide (15) begrenzt wird, und in der das Herausrutschen des Astes aus dem maultieferen Bereich (18a) der Maulöffnung begrenzt wird durch die im maulmittleren Bereich angeordnete maultiefere Flanke (Wirkflanke) (14) zumindest eines an der Amboßbacke (1) seitlich außerhalb der Amboßfläche (11) vorgesehenen, in die Maulöffnung ragenden und eine maulhöhere Flanke (17) aufweisenden Zahnes (12), **dadurch gekennzeichnet,** daß der Zahn (12) zwischen seiner maulhöheren Flanke (17) und seiner Wirkflanke (14) eine Wirkfläche (16a,16b) besitzt, die sich bis zum vorderen Ende der Amboßbacke (1) erstreckt.

2. Amboßgartenschere nach Anspruch 1, **dadurch gekennzeichnet,** daß die Wirkflanke (14) und zumindest der maultiefere Bereich (16a) der Wirkfläche (16a,16b) entlang einer Wellenlinie verlaufen.

3. Amboßgartenschere nach Anspruch 2, **dadurch gekennzeichnet,** daß die Wirkflanke (14) das Wellental und die Wirkfläche (16a) den Wellenberg der Wellenlinie bildet.

4. Amboßgartenschere nach Anspruch 3, **dadurch gekennzeichnet,** daß der Radius (R1) der Wirkflanke (14) gleich ist dem Radius des dicksten in den maultieferen Bereich (18a) der Maulöffnung (18a, 18b) einführbaren Astes.

5. Amboßgartenschere nach einem der Ansprüche 3 oder 4, **dadurch gekennzeichnet,** daß der Radius (R2) der Wirkfläche (18a) kleiner ist als der Radius (R1) der Wirkflanke (14).

6. Amboßgartenschere nach einem der Ansprüche 3 bis 5, **dadurch gekennzeichnet,** daß die Zentren (Z1 und Z2) der Radien (R1 und R2) in der Normalen (N) zur Schneide (15) durch den Mittelpunkt (M) des dicksten in den maultieferen Bereich (18a) der Maulöffnung (18a, 18b) einführbaren Astes liegen.

7. Amboßgartenschere nach einem der Ansprüche 3 bis 6, **dadurch gekennzeichnet,** daß der maulhöhere Bereich (16b) der Wirkfläche (16a, 16b) entlang einer ihren maultieferen Bereich (16a) tangierenden Geraden verläuft.

8. Amboßgartenschere nach einem der Ansprüche 1 bis 7, **dadurch gekennzeichnet,** daß ein Zahnpaar spiegelsymmetrisch um die Schwenkebene (13) der Schere angeordnet ist und der Spalt (20) zwischen den Zähnen (12,12) des Zahnpaares einen V-förmigen Querschnitt hat.

9. Amboßgartenschere nach einem der Ansprüche 1 bis 8, **dadurch gekennzeichnet,** daß der Gelenkbolzen (8) in der Verlängerung der Amboßfläche (11) und der Schneide (15) liegt.

10. Amboßgartenschere nach einem der Ansprüche 1 bis 9, in welcher die erste Griffhälfte (3) einen U-förmigen Querschnitt hat, **dadurch gekennzeichnet,** daß die erste Griffhälfte (3) bei der geschlossenen Schere die zweite Griffhälfte (6) teilweise umfaßt.

11. Amboßgartenschere nach Anspruch 10, **dadurch gekennzeichnet,** daß die quer zur Schwenkebene (13) gemessene Dicke (b) des nicht umfassten Teiles der zweiten Griffhälfte (6) größer ist als die Dicke (c) der ersten Griffhälfte (3).

12. Amboßgartenschere nach einem der Ansprüche 1-11, in welcher der Kreuzungsbereich (5) des Messerschenkels den taschenförmigen Kreuzungsbereich (2) des Amboßschenkels durchsetzt und in diesem gelagert ist, **dadurch gekennzeichnet,** daß das gelenkseitige Ende der zweiten Griffhälfte (6) mittels Lagerflächen (7) ebenfalls im taschenförmigen Kreuzungsbereich (2) gelagert ist.

13. Amboßgartenschere mit einem Amboßschenkel, bestehend aus einer Amboßbacke (1) mit einer Amboßfläche (11), einem Kreuzungsbereich (2) und einer ersten Griffhälfte (3), der einen Messerschenkel, bestehend aus einer Messerbacke (4) mit einer Schneide (15), einem Kreuzungsbereich (5) und einer zweiten Griffhälfte (6) kreuzt und an diesen mittels eines Gelenkbolzens (8) schwenkbar angelenkt ist, in der das maulhöhere Ende der Maulöffnung (18a, 18b) begrenzt wird durch den Kreisbogen, entlang welchem sich das maulhöhere Ende der Schneide (15) bewegt, und in der das Herausrutschen des Astes aus dem maultieferen Bereich (18a) der Maulöffnung (18a, 18b) begrenzt wird durch die im maulmittleren Bereich angeordnete maultiefere Flanke (Wirkflanke) (14) zumindest eines an der Amboßbacke (1) seitlich ausserhalb der Amboßfläche (11) angeordneten, in die Maulöffnung ragenden und eine maulhöhere Flanke (17) aufweisenden Zahnes (12), **dadurch gekennzeichnet**, daß der Zahn (12) zwischen seiner Wirkflanke (14) und seiner maulhöheren Flanke (17) eine Wirkfläche (16a, 16b) besitzt, welche sich bis zum maulhöheren Ende der Amboßbacke (1) erstreckt.

14. Amboßgartenschere nach Anspruch 13, ferner gekennzeichnet durch die bevorzugten Merkmale aus einem der Ansprüche 2 bis 12.

## Claims

1. Anvil-containing secateurs with an anvil leg, comprising an anvil jaw (1) with an anvil surface (11), a crossover (2) and a first handle half (3), which crosses over a blade leg, comprising a blade jaw (4) with cutting edge (15), a crossover region (5) and a second handle half (6), and is articulated pivotably on said blade leg by means of an articulation bolt (8), in which secateurs the mouth opening (18a, 18b) is bounded by the anvil surface (11) and the cutting edge (15), and in which the action of the branch slipping out of the lower-mouth-level region (18a) of the mouth opening is restricted by the lower-mouth-level flank (active flank) (14), arranged in the central-mouth-level region, of at least one tooth (12) which is provided on the anvil jaw (1), laterally outside the anvil surface (11), projects into the mouth opening and has a higher-mouth-level flank (17), characterized in that, between its higher-mouth-level flank (17) and its active flank (14), the tooth (12) has an active surface (16a, 16b) which extends as far as the front end of the anvil jaw (1).

2. Anvil-containing secateurs according to Claim 1, characterized in that the active flank (14) and at least the lower-mouth-level region (16a) of the active surface (16a, 16b) run along a wavy line.

3. Anvil-containing secateurs according to Claim 2, characterized in that the active flank (14) forms the wave trough, and the active surface (16a) forms the wave crest, of the wavy line.

4. Anvil-containing secateurs according to Claim 3, characterized in that the radius (R1) of the active flank (14) is equal to the radius of the thickest branch which can be introduced into the lower-mouth-level region (18a) of the mouth opening (18a, 18b).

5. Anvil-containing secateurs according to either of Claims 3 and 4, characterized in that the radius (R2) of the active surface (18a) is smaller than the radius (R1) of the active flank (14).

6. Anvil-containing secateurs according to one of Claims 3 to 5, characterized in that the centres (Z1 and Z2) of the radii (R1 and R2) are located on the normal (N) to the cutting edge (15) through the centre point (M) of the thickest branch which can be introduced into the lower-mouth-level region (18a) of the mouth opening (18a, 18b).

7. Anvil-containing secateurs according to one of Claims 3 to 6, characterized in that the higher-mouth-level region (16b) of the active surface (16a, 16b) runs along a straight line which is tangent to the lower-mouth-level region (16a) of said active surface.

8. Anvil-containing secateurs according to one of Claims 1 to 7, characterized in that a pair of teeth are arranged mirror-symmetrically about the pivot plane (13) of the secateurs, and the gap (20) between the teeth (12, 12) of the pair of teeth has a V-shaped cross section.

9. Anvil-containing secateurs according to one of Claims 1 to 8, characterized in that the articulation bolt (8) is located in extension of the anvil surface (11) and of the cutting edge (15).

10. Anvil-containing secateurs according to one of Claims 1 to 9, in which the first handle half (3) has a U-shaped cross section, characterized in that, with the secateurs closed, the first handle half (3) partially encloses the second handle half (6).

11. Anvil-containing secateurs according to Claim 10, characterized in that the thickness (b), measured transversely to the pivot plane (13), of the non-enclosed part of the second handle half (6) is greater than the thickness (c) of the first handle half (3).

12. Anvil-containing secateurs according to one of Claims 1-11, in which the crossover region (5) of the blade leg passes through the pocket-like crossover region (2) of the anvil leg and is mounted therein, characterized in that the articulation end of the second handle half (6) is likewise mounted in the pocket-like crossover region (2) by means of bearing surfaces (7).

13. Anvil-containing secateurs with an anvil leg, comprising an anvil jaw (1) with an anvil surface (11), a crossover (2) and a first handle half (3), which crosses over a blade leg, comprising a blade jaw (4) with cutting edge (15), a crossover region (5) and a second handle half (6), and is articulated pivotably on said blade leg by means of an articulation bolt (8), in which secateurs the higher-mouth-level end of the mouth opening (18a, 18b) is bounded by the circle arc along which the higher-mouth-level end of the cutting edge(15) moves, and in which the action of the branch slipping out of the lower-mouth-level region (18a) of the mouth opening (18a, 18b) is restricted by the lower-mouth-level flank (active flank) (14), arranged in the central-mouth-level region, of at least one tooth (12) which is arranged on the anvil jaw (1), laterally outside the anvil surface (11), projects into the mouth opening and has a higher-mouth-level flank (17), characterized in that, between its active flank (14) and its higher-mouth-level flank (17), the tooth (12) has an active surface (16a, 16b) which extends as far as the higher-mouth-level end of the anvil jaw (1).

14. Anvil-containing secateurs according to Claim 13, further characterized by the preferred features from one of Claims 2 to 12.

## Revendications

1. Sécateur à enclume comprenant une branche à enclume qui est formée d'une mâchoire à enclume (1) avec une surface d'enclume (11), d'une zone de croisement (2) et d'une première moitié de poignée (3), qui croise une branche tranchante formée d'une mâchoire tranchante (4) avec un tranchant (15), d'une zone de croisement (5) et d'une seconde moitié de poignée (6), et qui est articulée de manière pivotante à ladite mâchoire tranchante (4) à l'aide d'un axe d'articulation (8), étant précisé que l'ouverture des mâchoires (18a, 18b) est délimitée par la surface d'enclume (11) et le tranchant (15) et que le glissement de la branche hors de la zone inférieure (18a) de ladite ouverture est limité par le flanc inférieur (flanc actif) (14), disposé dans la zone centrale de l'ouverture, d'au moins une dent (12) qui est prévue sur le côté de la mâchoire à enclume (1), à l'extérieur de la surface d'enclume (11), qui fait saillie dans ladite ouverture et qui présente un flan supérieur (17),
caractérisé en ce que la dent (12) présente entre son flanc supérieur (17) et son flanc actif (14) une surface active (16a, 16b) qui s'étend jusqu'à l'extrémité avant de la mâchoire à enclume (1).

2. Sécateur à enclume selon la revendication 1, caractérisé en ce que le flanc actif (14) et au moins la zone inférieure (16a) de la surface active (16a, 16b) s'étendent le long d'une ligne ondulée.

3. Sécateur à enclume selon la revendication 2, caractérisé en ce que le flanc actif (4) définit le creux de la ligne ondulée, et la surface active (16a) la crête.

4. Sécateur à enclume selon la revendication 3, caractérisé en ce que le rayon (R1) du flanc actif (14) est égal au rayon de la plus épaisse branche apte à être introduite dans la zone inférieure (18a) de l'ouverture des mâchoires (18a, 18b).

5. Sécateur à enclume selon la revendication 3 ou 4, caractérisé en ce que le rayon (R2) de la surface active (16a) est inférieur au rayon (R1) du flanc actif (14).

6. Sécateur à enclume selon l'une des revendications 3 à 5, caractérisé en ce que les centres (Z1 et Z2) des rayons (R1 et R2) se trouvent sur la normale N au tranchant (15) qui traverse le centre (M) de la branche la plus épaisse apte à être introduite dans la zone inférieure (18a) de l'ouverture des mâchoires (18a, 18b).

7. Sécateur à enclume selon l'une des revendications 3 à 6, caractérisé en ce que la zone supérieure (16b) de la surface active (16a, 16b) s'étend le long d'une droite tangente à la zone inférieure (16a) de ladite surface active.

8. Sécateur à enclume selon l'une des revendications 1 à 7, caractérisé en ce qu'une paire de dents est disposée de manière symétrique par rapport au plan de pivotement (13) du sécateur, et l'interstice (20) entre les dents (12, 12) présente une section transversale en V.

9. Sécateur à enclume selon l'une des revendications 1 à 8, caractérisé en ce que l'axe d'articulation (8) se trouve dans le prolongement de la surface d'enclume (11) et du tranchant (15).

10. Sécateur à enclume selon l'une des revendications 1 à 9, dans lequel la première moitié de poignée (3) a une section transversale en U, caractérisé en ce que la première moitié de poignée (3) couvre partiellement la seconde moitié de poignée (6) quand le sécateur est fermé.

11. Sécateur à enclume selon la revendication 10, caractérisé en ce que l'épaisseur (b), mesurée transversalement par rapport au plan de pivotement (13), de la partie non couverte de la seconde moitié de poignée (6) est supérieure à l'épaisseur (c) de la première moitié de poignée (3).

12. Sécateur à enclume selon l'une des revendications 1 à 11, dans lequel la zone de croisement (5) de la branche tranchante traverse la zone de croisement en forme de poche (2) de la branche à enclume et est en appui dans celle-ci, caractérisé en ce que l'extrémité de la seconde moitié de poignée (6) située côté articulation est également en appui dans ladite zone de croisement (2) grâce à des surfaces d'appui (7).

13. Sécateur à enclume comprenant une branche à enclume qui est formée d'une mâchoire à enclume (1) avec une surface d'enclume (11), d'une zone de croisement (2) et d'une première moitié de poignée (3), qui croise une branche tranchante formée d'une mâchoire tranchante (4) avec un tranchant (15), d'une zone de croisement (5) et d'une seconde moitié de poignée (6), et qui est articulée de manière pivotante à ladite mâchoire tranchante (4) à l'aide d'un axe d'articulation (8), étant précisé que l'extrémité supérieure de l'ouverture de mâchoires (18a, 18b) est limitée par l'arc de cercle le long duquel l'extrémité supérieure du tranchant (15) se déplace, et que le glissement de la branche hors de la zone inférieure (18a) de ladite ouverture (18a, 18b) est limité par le flanc inférieur (flanc actif) (14), disposé dans la zone centrale de l'ouverture, d'au moins une dent (12) qui est disposée sur le côté de la mâchoire à enclume (1), à l'extérieur de la surface d'enclume (11), qui fait saillie dans ladite ouverture et qui présente un flan supérieur (17),
caractérisé en ce que la dent (12) présente entre son flanc actif (14) et son flanc supérieur (17) une surface active (16a, 16b) qui s'étend jusqu'à l'extrémité supérieure de la mâchoire à enclume (1).

14. Sécateur à enclume selon la revendication 13, également caractérisé par les caractéristiques préférées spécifiées dans les revendications 2 à 12.
